# EUROPEAN PATENT APPLICATION

(11) **EP 2 309 745 A1**
(43) Date of publication of application: **13.04.2011**
(21) Application number: 09169825.8
(22) Date of filing: 09.09.2009
(51) Int. Cl.: H04N 7/167

(54) **Encryption procedure and device for an audiovisual data stream**

(71) Applicant: Alcatel-Lucent España, S.A., 28045 Madrid (ES)
(72) Inventor: Perez García, Pablo, 28045 Madrid (ES); Ruiz Alonso, Jaime, 28045 Madrid (ES)
(74) Representative: Elzaburu Marquez, Alberto

(57) **Abstract**

Apparatus for encrypting a stream of audiovisual data generated by an encoder (11); comprises an encrypter (113) module that analyses the data stream to determine if said stream includes at least one slice relative to a layer of video codification; for encrypting at least a set of bit nearby or adjacent to a slice header; and inserts the generated encrypted set of bit into the data stream that will be transported by a digital telecommunications network (12) to a customer's local equipment.

## Description

### FIELD OF THE INVENTION

This invention refers to a data encryption procedure in general, more specifically audiovisual and multimedia content data that have been encrypted prior to distribution over a packet oriented digital telecommunications network.

### STATE OF THE ART

Today, the main problem faced by the broadcasting of audiovisual and multimedia contents, e.g. video images, is one of limited resources and, primarily, the bandwidth for transmission and the storage capacity; therefore, compression techniques for digital video have been developed.

The purpose of compression is to reduce the size of the video images to be broadcast by introducing the least amount of distortion into the process, and it is based on eliminating the redundancy existing in time and space. Since the video is formed by images - data matrices - taken sequentially every certain fraction of a second, this therefore means there is redundancy between each of the data matrices.

The coding of video images should comply with the series of recommendations included in any coding protocol, e.g. protocol H.264, which recommends executing the coding by layers instead of by complete frames in order to increase the compaction of the data images in a sequence to a small number of bits, a process known as compression.

When multimedia data are transported over a telecommunications network, the multimedia data source intends the transmitted product to be received and used only by end users who are lawfully entitled to access the data. Therefore, for purposes of controlling access to a predetermined flow or stream of encoded audiovisual data, that data stream must be encrypted so that the end customers that have acquired the right to view it on local customer equipment are allowed to access it.

Consequently, an encryption procedure for the target data stream must be used to generate a protected data packet stream for broadcast that occupies a reduced bandwidth, such as the broadcast stream generated by application of protocol H.264 to a video image stream.

### SUMMARY

This invention seeks to solve or minimize one or more of the drawbacks explained above through an audiovisual and multimedia content data encryption procedure, as defined in claim 1. Embodiments of the invention are provided in the subsidiary claims.

One object of the invention is to provide an encryption procedure that encrypts a reduced volume of data from the video image stream generated for broadcast by application of any standard coding protocol with a high rate of video image compression, preserving the quality of it as MPEG-n, where n=1, 2, etc.; H.264. Therefore, one object is to offset the always existing limitations related to the capacity of the wired or wireless communication channel.

Another object of the invention is to limit the increasing computing complexity both in the encoder or network side, and in the decoder or local customer equipment side. This thus increases the experience of the customer-user of controlled access Internet-based multimedia applications.

It should be noted that the aforesaid type of compression protocol with a high rate of compression requires more processing power than low compression rate protocols.

Yet another object of the invention is to broadcast an encrypted data stream that is transparent to the equipment of the packet oriented digital telecommunication network used for transport of the protected data stream. This allows for more efficient use of the existing telecommunications network infrastructure and greater accessibility to higher quality multimedia applications.

Still another object of the invention is to use the capacity of recovery from an error or event (error resilience feature) of the standard compression protocol used to prevent decryption by an unauthorized end customer of the packets broadcast as a protected data stream. That is, where there is a need to protect encoded multimedia data sent from a server to an end user-customer over a telecommunications network, to prevent unauthorized access by third parties.

Consequently, the source of the multimedia data intends the packets of the encoded, compressed data stream to be received and used only by the end users-customers, i.e., subscribers, who are duly authorized to access the data thus broadcast.

### BRIEF DESCRIPTION OF THE FIGURES

A more detailed explanation of the invention is provided in the following description based on the attached figures, in which:

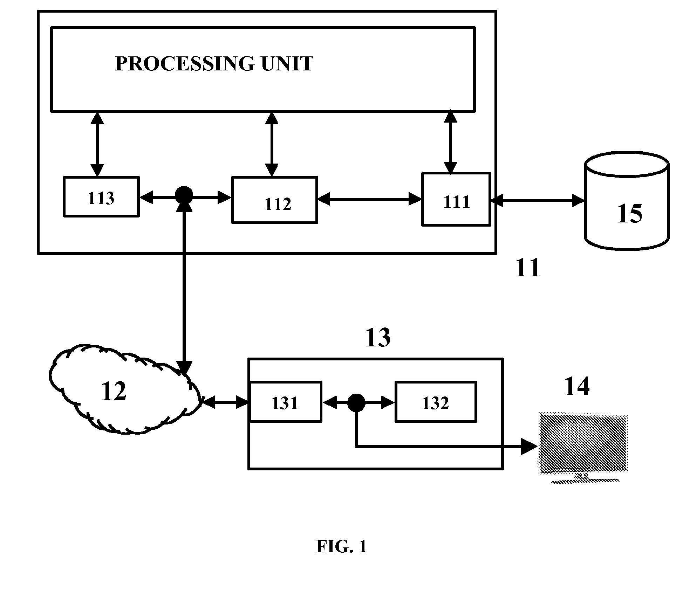

Figure 1 basically depicts a system for encoding audiovisual data according to the invention.

### DESCRIPTION OF EMBODIMENTS

To help explain the encryption procedure for audiovisual and multimedia content data broadcast as digital TV, e.g., on an IP digital telecommunications 12 network, using standard coding protocol H.264 to compress the video signal provided by the multimedia server 15 of a service provider to a set of subscribers or authorized customers.

However, the encryption procedure of the invention can be applied to other standard coding-compression protocols employed for data that can be broken down into packets before being transported by a transport protocol such as the Real-time Transport Protocol (RTP Protocol), MPEG-2, etc.

In accordance with the invention, a multimedia server 15 supplies protected multimedia data to data subscribers 13 via a data packet transport network 12. The server 15 receives the multimedia content from multiple signal sources and supplies multimedia data for an encryption operation and breakdown into packets for transmission.

A coding 11 module or encoder is connected to the multimedia server 15 and encodes the multimedia data according to a standard coding protocol like H.264.

An encoder 111 output unit is in turn connected to the input unit 112 of a packetizing module that breaks the compressed video signal down into data packets according to a transport protocol like the transport layer of the MPEG-2 transport stream in which each data packet contains elementary stream information, e.g., video, audio, data).

The data packets so generated are sent to an encoding 113 module that selects at least one of the packets received, which is encrypted to transport packet level. Encoder 113 output thus generates a stream of encoded, protected data packets which are transmitted to subscribers over the TCP/IP transport network.

The compressed, protected data packets are transparent to the different components of the transport network 12.

The encoder 11 can receive in one of its inputs a multimedia content signal corresponding to videoconferencing services, video broadcast of TV contents, high definition TV (HDTV), continuous and video signal transmission for laptops, telemedicine, teleteaching, etc.

As mentioned above, the encoder 11 generates a data streaming in its output that can be transported by a digital telecommunications network 12, e.g. an IP network, 3G network, etc., reducing the bandwidth required to provide digital multimedia services and with the positive result of being suited to online transmission of video-based contents.

In accordance with the above, any type of encryption procedure may be used by the encoder 113 to protect the data stream. However, the encryption procedure will be selected with a view to taking advantage of protocol H.264's error resilience feature.

Protocol H.264 comprises two layers; one of them is the network abstraction layer NAL, and the other is the video coding layer VCL.

The VCL is in charge of coding processes; it generates as an output a sequence of bits that represents the coded video data of the multimedia content. The coded stream of bits will subsequently be transported by the telecommunications network. It should be noted that each network can have a different transmission rate.

The NAL is responsible for packetizing the coded data generated by the VCL into units knows as NAL units. Packetizing is to be appropriate to the characteristics of the network that will transport the video data stream to the end customers via MPEG-2 transport stream, RTP, etc.

Therefore, the NAL and the VCL have functions that are independent of each other.

To summarize, a video sequence coded according to H.264 comprises a series of NALUs, and each of the NALs includes a set of bits corresponding to the header and a data sequence of varying length corresponding to the payload.

There are different types of NALUs, such that each type of NALU has a different content and syntactic structure and is transported separately to a customer-user decoder.

According to protocol H.264, the encoded data of a slice may be located in three different data partitions A, B and C. Partition A contains the slice headers and data headers for each macroblock in the slice.

If partition A gets lost or corrupted, it is impossible to reconstruct the video data stream received in a decoder 13. Therefore, this is the partition most sensitive to errors.

Errors are known to occur during video data stream transport; therefore, protocol H.264 includes a mechanism that provides it with the correction in the event of data and packet loss - the error resilience feature.

Partition B includes the encoded residual data of Intra slice macroblocks.

Partition C comprises the encoded data of Inter macroblocks. Each partition can be localized in an NALU for transport.

All the data in a slice may also be included in a single NALU for transport without the partitioning just described above.

Each NALU comprises slices, which in turn comprise header data, Intra data or Inter data, or all three. Consequently, the encoder includes means to form the different NAL unit packets in accordance with the syntax of protocol H.264, which includes a header and a payload.

A header is added to each NALU packet generated by the encoder 11, with information on the transmission of each unit according to the transport protocol used to broadcast them. Thus, an RPT header, RTP packet stream, will be added if the RTP is used, or an MPEG-2 header, packetized elementary stream PES, will be added if MPEG-2 transport stream is used.

In accordance with the embodiment, the encrypter 13 encodes a given NALU specifically selected for that purpose such that an unauthorized customer's decoder regards the compressed, protected data packet as a corrupted packet, making it impossible to reconstruct the video data stream received in that packet.

The encrypter 113 evaluates the header of each NALU received and, in the event that a received NALU is VCL type, it then performs an encryption function of at least a set of bits adjacent or nearby to the end of the slice header.

If, on account of the data structure used to transport the stream, the byte adjacent to the slice header cannot be encoded, at least the first set of bits following the slice header that can be encoded will be encrypted.

It should be noted that a NALU can be located in several data packets for transmission, a typical IPTV scenario.

In short, the encrypter 113 encrypts the first transport packet immediately after the transport packet that contains the end of each slice header.

In addition, the security of the packets transported by the IP network can be increased, in the case that any transport packet randomly selected from among the rest of the transport packets into which a VCL NAL unit has been packetized is also encrypted.

It should be noted that a NAL unit may not include a slice header unit, e.g., slice data partition types B and C; therefore, the first byte after the NAL header will be encrypted.

The data stream received by an authorized customer-user's decoder 13 connected to a decryption 131 module capable of receiving the data stream from the transport network 12 which decodes any encrypted packet received. Decoding is the inverse of the procedure employed to generate the protected packetized data stream. If that same procedure is attempted by an unauthorized customer-user's decoder 13, the essential encrypted packets necessary to recover the encoded images will not be able to be decoded.

Consequently, a decrypted video signal is generated at the decoder 132 output unit and transmitted to the decoder 13 to be converted into a data format suitable for being viewed on the customer-subscriber's display 14 screen or stored locally on the customer-subscriber's local hardware.

If the decoder 13 that receives the partially encrypted data stream does not include the corresponding decryption 132 module, it will not be able to decode the encrypted packets; therefore, the encrypted packet will be interpreted as an erroneous or corrupted packet and, consequently, the decoder 13 will not be able to send a decrypted and decoded signal to the customer's local equipment.

It should be noted that, if the header of the NAL unit is not encrypted, the partially encrypted data stream passes through the different network 12 equipments that take part in its transport in transparent mode.

The encryption method comprises the steps of receiving the NAL units generated by the encoder, analysing the type of NAL unit received and, in the event that the NAL unit is VCL type, encrypting at least one byte adjacent, or located as close as possible, to the slice header received. The encrypted part will subsequently be transported through the telecommunications network 12 to the decoder of the customers-users.

The encryption procedure can be executed by a computer, loadable into an internal memory of a computer with input and output units and also with processing units.

For this purpose, the computer program comprises configured codes to execute the steps of the aforesaid process when it is executed by the computer. In addition, the executable codes can be recorded on a readable carrier medium inside a computer.

## Claims

1. **Apparatus** for encrypting a stream of audiovisual data generated by an encoder (11); **characterized in that** it comprises an encrypter (113) module that analyses the data stream to determine if said stream includes at least one slice relative to a layer of video codification; for encrypting at least a set of bits nearby or adjacent to a slice header; and inserts the generated encrypted set of bits into the data stream that that will be transported by a digital telecommunications network (12).

2. **Apparatus** according to claim 1; **characterized in that** the encrypter (113) module selects a predetermined slice on the basis that the generated encrypted set of bits will be interpreted in a decoder (13) receiving it as an erroneous or corrupted packet.

3. **An encryption procedure** of an audiovisual data stream generated by an encoder (11) following a standard compression protocol; **characterized in that** the procedures comprises the following steps:
a. analysing of the data stream received to determine if said stream includes at least one slice relative to a layer of video encryption,
b. encrypting of at least a set of bits nearby or adjacent to a header of the analyzed slice, and
c. inserting of the generated encrypted set of bits into the data stream to be transported by a digital telecommunications network (12) to a customer's local equipment.

4. **A procedure** according to claim 3; **characterized in that** the number of set of bits encrypted during the encryption stage depends on the number set of bits that should be undecodable so that a decoder (13) will interpret that it has received a data stream containing at least one erroneous or corrupted packet.

5. **Decoder unit** connectable to a digital telecommunications network (12) that receives a data stream relative to a multimedia audiovisual content signal that is be encoded according to a standard coding protocol; **characterized in that** the decoder (11) provides a data stream consisting in slices relative to a layer of video codification to an encryption module.

6. **Decoder unit** according to claim 5; **characterized in that** the encoder (11) includes an encryption (113) module that encrypts a predetermined number of set of bits nearby or adjacent to a slice header, the number of set of bits depending on the number of set of bits that should be undecodable so that a decoder (13) receiving the encrypted data stream will interpret that it has received at least one erroneous or corrupted packet.

7. **Decoder unit** connectable to a digital telecommunications network (12) that receives a data stream relative to a multimedia audiovisual content signal that is codable according to a standard coding protocol transported by a digital network; **characterized in that** the decoder (13) is connectible to a decryption (132) module that decrypts at least one encrypted set of bit included in the data stream received from the decoder, which generates a unencrypted signal that in turn is decompressed in the decoder (131) that is sent to a display (14) screen of the customer's local equipment.

8. **A computer program** loadable into an internal memory of a computer with input and output units and a processing unit, where the computer program comprises configured executable code which, when executed by the computer, performs the steps of the encryption procedure for an audiovisual data stream generated by an encoder according to a standard compression protocol, as per any of claims 3 to 4.
